# DEMANDE DE BREVET EUROPEEN

(11) **EP 0 672 344 A1**
(43) Date de publication de la demande: **20.09.1995**
(21) Numéro de dépôt: 95460011.0
(22) Date de dépôt: 09.03.1995
(51) Int. Cl.: A01K 1/00, F24F 11/00

(54) **Procédé de régulation de ventilation d'un bâtiment avec contrôle de débit**

(30) Priorité: 17.03.1994 FR 9403382
(71) Demandeur: Hameury, François, F-29241 Locquirec (FR)
(72) Inventeur: Hameury, François, F-29241 Locquirec (FR)

(57) **Abrégé**

Le procédé de régulation consiste à faire varier les débits en agissant sur une surface de passage d'air (4), par exemple une entrée d'air à volets asservis d'un bâtiment d'élevage et à agir sur les ventilateurs (1) de façon à conserver au niveau de ce passage une vitesse de consigne qui peut être indexée sur les caractéristiques de l'air entrant et les écarts avec celles de l'air ambiant intérieur mesurés par une sonde(6). La vitesse mesurée (2) pouvant l'être en un lieu différent du passage par mesure d'une vitesse parasite d'entrée ou d'une pression différentielle. L'ensemble est géré par un boitier électronumérique de commande (5). Ventilation de bâtiments ventilés de façon dynamique avec variation de débits, notamment tout bâtiment d'élevage.

## Description

L'invention concerne tous les cas d'installation de ventilation de bâtiments où le débit d'air doit être variable et contrôlé de façon précise, notamment les bâtiments d'élevage ( aviculture, cuniculture, porcs, ..).

Dans de nombreuses applications, et notamment dans les bâtiments d'élevage, le débit d'air doit être variable selon des loies de variations pouvant tenir compte entre autre de la température du local, de son hygrométrie, de la quantité d'animaux présents et de leur poids, des gaz dégagés comme le gaz carbonique ou l'amoniac.

La qualité du réglage, en particulier sa pérénité dans le temps , sa stabilité, et bien sur son niveau, peut avoir une grande importance sur les résultats zootchniques dans le csa d'un élevage, et dans tous les cas sur la qualité de l'équilibre résultant comme sur la consommation énergétique.

La qualité de l'équilibre résultant des divers paramètres ( température, hygrométrie, enthalpie, ..) en terme de vitesse de variation et de répartition (gradiant) est en effet directement influencée par les variations aléatoires des débits d'air dans l'espace comme dans le temps.

Or, dans les installations actuelles le débit d'air reste très aléatoire, pouvant être influencé par de nombreux facteurs parmi lesquels on peut citer de façon non exhaustives les vents, I'état des ventilateurs, I'état de la tension d'alimentation, et l'entretien du matériel.

**SCHEMA N°1**, dans lequel est affiché deux exemples de débit de ventilation variable, dans lesquels sont relevés les débits réels en fonction des la tension d'alimentation des ventilateurs. La dispersion apparait clairement dans un cas comme dans l'autre .

Dans les installations actuelles, le débit est ajusté en général soit de façon fixe en jouant sur des réglages de pertes de charges ou de surface ( bouches, ...) , soit de façon variable en jouant sur la tension d'alimentation du ou des ventilateurs ( à moteurs glissants monophasés ou à variation de fréquence mono ou triphasés). L'incidence sur le débit est alors contrôlée soit de façon indirecte par l'effet sur une température (**schéma 2**) par exemple ou par une mesure de débit directe dans la gaine de ventilation (**schéma 3**), ou par une mesure de rotation sur le ventilateur (**schéma 4**).

Les limites de ces systèmes sont, dans le cas **Schéma N°2**, des débits réels aléatoires avec les conditions de vent, et d'état d'entretient du matériel, comme de la tension d'alimentation générale . Dans le cas **Schéma N0°3**, de ne pouvoir être èfficace que dans les systèmes dans lesquels il n'y a qu'un ventilateur et que celui-çi soit installé en cheminée en tout cas qu'une mesure de débit soit possible dans l'installation. Dans le cas **Schéma N°4**, une mesure de vitesse de rotation ne peut pas garantir un débit correspondant avec une grande précision.

Dans tous les cas, le principe de vouloir contôler les débits en agissant sur le ou les ventilateurs présente des limites sérieuses.

Une invention décrite dans le brevet Allemand DE U 9217896 ne s'occupe uniquement que du traitement de la portée du flux d'air entrant, contrôlée par l'intermédiaire de la pression différentielle entre l'intérieur et l'extérieur.

La maîtrise du débit d'air n'entre en aucune manière dans les considérations de ce brevet contrairement à l'objectif de l'invention présente. En effet, dans le brevet DE U 9217896, la surface d'entrée d'air est déterminée par l'ouverture des volets latéraux uniquement en fonction de la température intérieure, indépendamment de la pression différentielle et donc de la vitesse d'entrée déterminée, elle, par la portée du flux . Le débit résultant est donc aléatoire avec les conditions extérieures et les écarts entre l'intérieur et l'extérieur.

Il n'y a pas de rapport dans ce cas entre le réglage de la pression différentielle et le débit d'air puisque la consigne de dépression varie avec la température intérieure et la température extérieure, alors que la surface de passage varie uniquement avec la température intérieure et de facon indépendante .

Le domaine d' application du brevet DE U 9217896 concerne de part son principe même et de part son libéllé uniquement les bâtiments à entrée d'air latérale avec volets, en extraction uniquement, avec un ou plusieurs ventilateurs en cheminée. Ceci n'est en aucun cas représentatif de l'ensemble des bâtiments et des modes de ventilation.

Le brevet DE U 9217896 est limité de part son principe même et de part son libéllé à l'utilisation d'une sonde de pression différentielle, pour laquelle l'interprétation de la mesure en terme de vitesse d'entrée d'air et donc de débit est très délicate voire difficile.

En conclusion, l'invention telle que définie par le brevet allemand DE U 9217896 tant dans ses objectifs que dans ses moyens et applications ne peut prétendre pouvoir maîtriser les débits d'air ni pouvoir s'appliquer à toutes sortes de systèmes de ventilation.

D'où l'idée d'un principe de ventilation dans lequel le contrôle du débit se fait par l'intermédiaire d'une variation de surface, avec une vitesse d'air de consigne ( ou une pression de consigne, ce qui est équivalent ).

Le principe est donc à l'opposé des pratiques usuelles, dans la mesure où le ou les ventilateurs n'ont pour objet que de garantir un potentiel de débit ( mesure de pression ou de vitesse) .

Le principe de la régulation est le suivant :
1/ le contrôle des débits se fait à travers le réglage d'une surface de passage de façon mécanique par exemple ( comme l' action d'un verin sur une trappe ).
   Il est malheuresement connu, qu' une variation de surface ne donne pas une variation proportionnelle du débit, même avec une vitesse constante ou une dépression constante.
   Ceci est dû au fait que les profils de vitesse évoluent avec la géométrie de la section et le débit qui y passe, et donc une mesure ponctuelle de vitesse ne peut donner qu'une aproximation de la vitesse moyenne débitante. Un étalonnage de départ pourra donc s'avérer utile pour correler la vitesse mesurée et la vitesse moyenne débittante.
   Dans le cas d'une pression de consigne, la relation débit passant-pression est liée à la perte de charge à l'entrée d'air. Or le coefficient de perte de charge varie avec la géométrie de la section et le débit qui y passe ce qui rend très difficile son interprétation.
   L' évolution de la surface en fonction du débit désiré pourra donc, selon le niveau de précision souhaitée, le type de surface d'entrée ( diaphragme, trappe, ..) et le principe de contrôle ne pas être linéaire et être pondérée .
2/ pour que le débit soit liè à la surface, il convient de régler la vitesse de passage de l'air à travers l'organe de réglage, elle devient une consigne indépendante.
   Cette vitesse de passage qui devient une consigne , pourra être mesurée directement par l'intermédiaire de toute technique par ailleurs connue comme une sonde anémométrique à moulinet ou a fil chaud, ou indirectement par l'intermédiaire de toute technique par ailleurs connue comme une sonde de pression différentielle d'air.
   Cette mesure pourra être éffectuée aussi bien localement au niveau de l'organe de réglage, ou en tout autre lieu du bâtiment, par exemple en toiture, se libérant ainsi de l'action du vent sur la mesure. En effet, si l'organe de réglage se situe aux entrées d'air du bâtiment, par exemple un volet mobile, la vitesse mesurée sur une entrée parasite quelconque est représentative après une éventuelle correction de celle aux entrées d'air réglables.
   Cette consigne pourra varier de façon automatique par programmation du régulateur ou manuelle en fonction des désirs de l'utilisateur;
   Les variations pouront être indexées par exemple selon la saison, la température de l'entrée d'air, la portée du jet d'air, les ecarts de condition (température, hygrométrie, densité, enthalpie,..) entre l'air entrant et l'air en salle, ainsi que selon le type d'occupation de la salle ( age poids et nombre des animaux par exemple).
   Les évolutions de la vitesse pourront être correllées avec la surface de passage de façon à conserver un débit constant. Dans ce cas, il convient de faire attention aux courbes caractéristiques des ventilateurs, qui réclament une surface minimale de passage ou un coefficient global maximum de pertes de charges pour permettre aux ventilateurs de fonctionner correctement.
3/ Les ventilateurs sont réglés par un organe de commande, par exemple un boitier électronique, qui envoie au (x) ventilateur (s) une information de commande utilisant toute technique par ailleurs connue pour faire varier un ventilateur.
   Dans le cas des ventilateurs glissants usuels, cette information de commande sera par exemple une tension variable produite par un régulateur electronique.
   Cette information de commande pourra être aussi bien une variation de fréquence.
   Cette commande, ou (et) le nombre des ventilateurs, est ajustée de manière à conserver aux entrées d'air une vitesse de consigne.
   Dans le cas ou une grande amplitude est réclamée pour la variation du débit, il est en effet possible en accord avec les techniques usuellement pratiquées d'enclencher les ventilateurs en cascade.

### exemple: Schéma N°5

L'avantage du système réside dans une très grande stabilité des débits, celui-çi se libérant des contraintes usuelles des systèmes classiques :

Variabilité due au vent, à l'état des pales des ventilateurs, et aux conditions d'alimentation en énergie. De plus, un seul point de contrôle de pression ou de vitesse peut suffire pour maitriser plusieurs ventilateurs, et ce dans un grand volume.

Le débit peut être directement accessible par l'utilisateur visuellement, le tout avec une vitesse d'entrée stable et réglable (très grand intérêt pour des utilisateurs comme les éleveurs de poulets)

La vitesse peut être connue par exemple avec une mesure anémomètrique en entrée d'air, ou avec une mesure de dépression entre l'espace ventilé et l'espace extérieur à l'entrée d'air.

L'installation du système peut être effectuée sur la plupart des ventilation est des bâtiments existants, sans modifications importantes . En effet, le matériel par ailleur connu qui est utilisé dans ces installations reste compatible, comme les ventilateurs, les organes de régulations , les entrées d'air variables. Seuls seront nécessaires une sonde de vitesse ou de pression différentielle en sus ainsi qu'une modification du ou des boitiers de régulations électroniques au niveau du principe d'analyse et au niveau des entrées-sorties.

### Exemple d'installation dans un bâtiment d'élevage avicole : Schéma 6

avec:
1 ventilateurs
2 capteur de vitesse parasite d'entrée d'air protégé de l'action des vents
3 réglage mécanique de l'entrée d'air
4 entrée d'air à vitesse régulée
5 Boitier électro-numérique de réglage et de commande, usuellement appelé régulation
6 information intérieure: mesure de température et/ou d'hygrométrie

L'invention présente concerne tous type de bâtiments, et tous types d'élevages que la ventilation soit en surpression ou en dépression, et quelque soit le mode d'entrée d'air en salle. Il est donc possible de compléter l'exemple du schéma N°6 par l' exemple du **schéma N°7** avec les mêmes éléments constitutifs (1 à 6), dans un bâtiment d'élevage Porcs, dans lequel l'air entre en salle à partir d'un sas extérieur, puis est distribué par l'intermédiaire d'un plafond diffuseur (7) avant d'être extrait par une gaine basse (8) équipée d'un ou plusieurs ventilateurs.

### Fonctionnement du ou des ventilateurs Schéma N° 8

Le schéma N°8 représente la famille de courbes caractéristiques d'un ventilateur classique à moteur glissant avec en abcisse le débit passant et en ordonnée la perte de charge globale du système. Les courbes sont celles obtenues en faisant varier la tension d'alimentation du ventilateur.

Dans le cas d'utilisation d'un ventilateur de type usuel à moteur glissant, le fonctionnement habituel consite d'une part en variant la tension d'alimentation à faire varier le point de fonctionnement le long d'une parabole caractéristique du coefficient de pertes de charges global du système entre un minimum (point A) et un maximum (point B). Dans les sytèmes incluant un réglage de surface de passage, par exemple un volet mobile d'entrée d'air, ce réglage agit sur le déplacement de la parabole, pouvant alors faire passer le point du minimum vers le point C si on ferme les entrée d'air, ou le point de maximum vers le point D si on ouvre les entrées d'air . Tous les cas intermédiaires restants possibles, ce qui rend très difficile le contrôle global du résulat.

Dans les cas du système proposé, le point de fonctionnement se déplace alors selon une courbe globalement parallèle aux abcisses tant que la vitesse consignée reste constante, et avec une marge de précision dépendant de la sensibilité de l'instrumentation et des réglages de la régulation donnant de fait une zone globale de déplacement du point de fonctionnement située entre deux courbes globalement parallèles aux abcisses ( droites EE et FF )

Le déplacement dans cette zone entre un minimum (point G) et un maximum (point H) se fait en modifiant la surface de passage en fonction des débits utiles

L'action de la régulation sur le ventilateur consiste alors à ajuster la tension d'alimentation pour que le point de fonctionnement reste dans les limites demandées de la zone de fonctionnement ( entre les droites EE et FF ).

Une modification de la vitesse de consigne correspondra alors à un déplacement de cette zone de fonctionnement soit vers le haut en cas d'augmentation de cette consigne, soit vers le bas dans le cas contraire.

L'ajustement de la largeur de la zone pourra être effectué en fonction des caractèristiques des sondes utilisées et des réactions du système.

Dans le cas de grandes variabilités de débits utiles, l'enclenchement et le déclenchement successif des ventilateurs se fait de la même manière que précédemment en faisant en sorte que le point de fonctionnement se situe dans la zone définie .

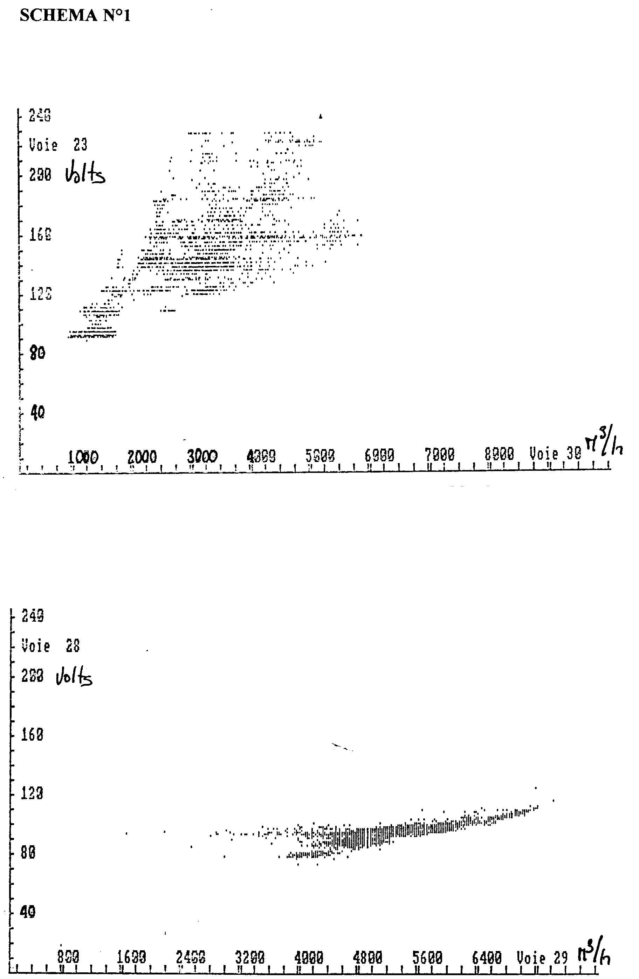

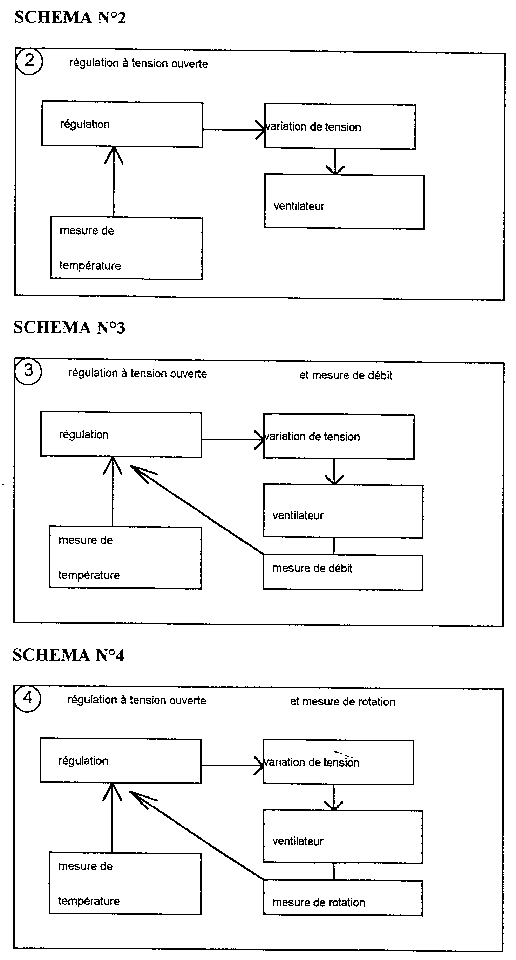

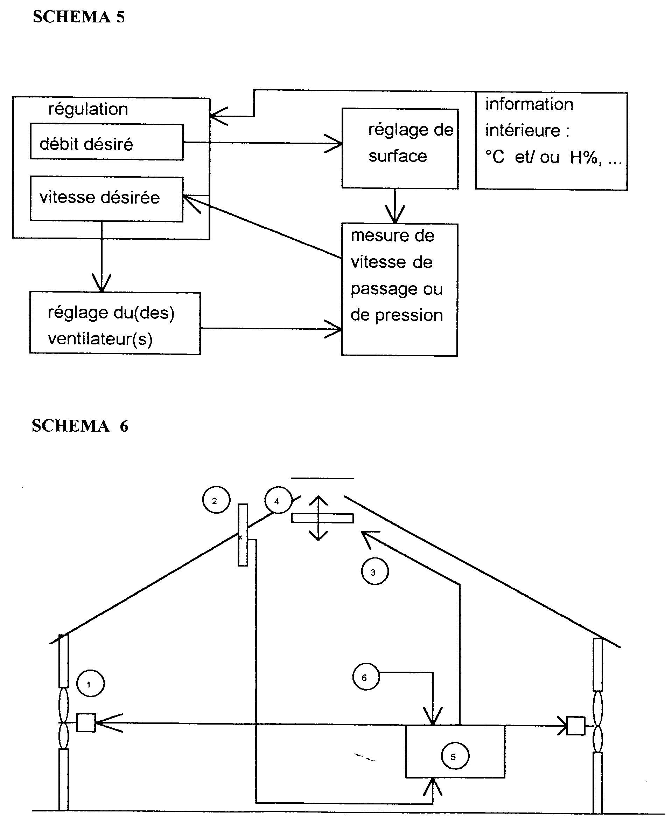

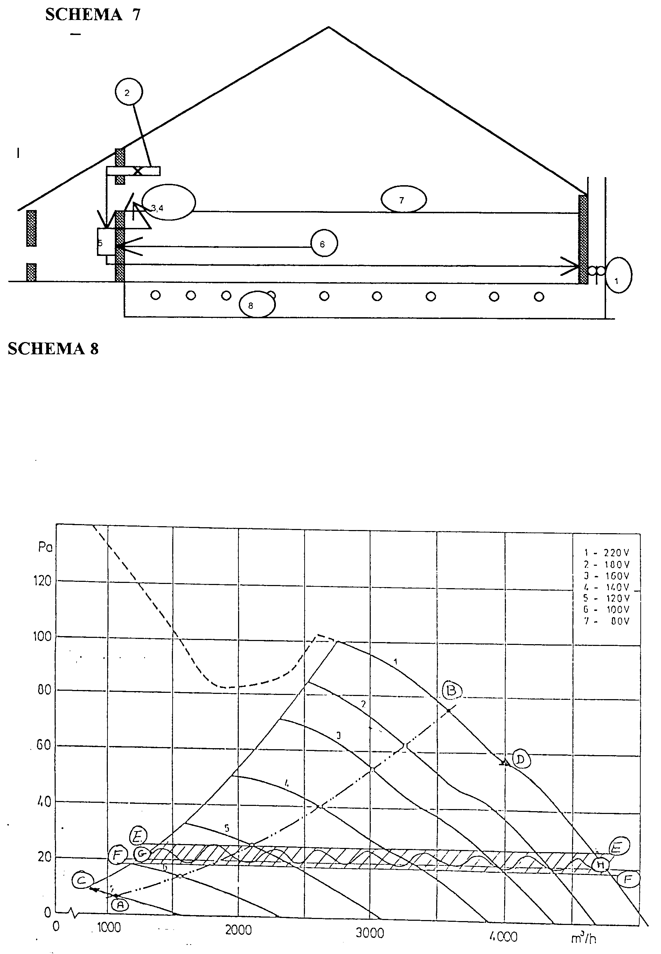

## Revendications

1. Procédé pour réguler et maitriser le débit d'une ventilation à débit variable d'un bâtiment ventilé en surpression ou/et dépression, et notamment tout bâtiment d'élevage.
Le bâtiment comportant au moins un passage d'air entre l'intérieur et l'extérieur de section réglable et au moins un ventilateur d'admission ou d'extraction d'air,
caractérisé en ce que :
a/ l'on fixe une valeur de consigne pour la vitesse de passage de l'air mesurée directement par l'intermédiaire d'une sonde vitesse ou indirectement par l'intermédiaire d'une sonde de pression différentielle;
b/ l'on règle la section de passage de l'air en fonction de cette valeur de consigne et du débit d'air désiré et,
c/ l'on commande les ventilateurs de manière à maintenir la vitesse de passage de l'air à son niveau de consigne.

2. Procédé selon la revendication 1, selon lequel les variations du débit d'air sont indéxées à partir d'informations sur les conditions intérieures d'ambiance, en particulier la température ou l'hygrométrie, ainsi qu'éventuellement sur l'état ou le nombre d'animaux dans le cas d'un élevage, et sont obtenues par action sur un volet asservi.

3. Procédé selon la revendication 1 ou 2, selon lequel le ou les ventilateurs du système sont régulés de façon à assurer en un point quelconque du système, par exemple aux entrées d'air, une vitesse dite de consigne pouvant être adaptée soit par intervention humaine sur la régulation en fonction des nécéssités intérieures, soit automatiquement en fonction entre autre des écarts des caractéristiques de températures et d'hygrométries entre l'air entrant et l'air ambiant intérieur.

4. Dispositif pour la mise en oeuvre du procédé selon l'une des revendications 1 à 3 caractérisé en ce qu'il comprend :
- une surface de passage d'air (4) réglable de façon automatique comme un volet motorisé, avec commande à distance, et les moyens de commande de cette surface (3).
- Une sonde (2) de mesure de la vitesse ou de la pression différentielle représentative de celles existantes au niveau du passage d'air variable.
- Un ou plusieurs ventilateurs (1) fonctionnant en parallèle ou en série, et éventuellement en cascade.
- Un boitier de commande électro-numérique de régulation (5) agissant d'une part sur la surface réglable de passage, et d'autre part sur le ou les ventilateurs.
- Une sonde (6) de mesure des conditions intérieures en température et:ou hygrométrie.
